# EUROPEAN PATENT APPLICATION

(11) **EP 4 779 779 A1**
(43) Date of publication of application: **22.07.2026**
(21) Application number: 25867151.0
(22) Date of filing: 20.10.2025
(51) Int. Cl.: H01M 50/30, H01M 50/147, H01M 50/20, H01M 50/204, H01M 50/211, H01M 50/271, H01M 50/367, H01M 50/383

(54) **BATTERY PACK**

(30) Priority: 19.11.2024 KR 20240165054
(71) Applicant: LG Energy Solution, Ltd., Seoul 07335 (KR)
(72) Inventor: LEE, Jung Hoon, Daejeon 34122 (KR); JUNG, Hye Mi, Daejeon 34122 (KR); KIM, Kwang Mo, Daejeon 34122 (KR); LEE, Joo Hyoung, Daejeon 34122 (KR)
(74) Representative: Plasseraud IP
(86) International application number: PCT/KR2025/016557
(87) International publication number: WO 2026/111193

(57) **Abstract**

A battery pack according to some embodiments includes:
a pack housing including a base plate and a side wall;
a venting device located on the side wall;
a battery cell assembly on the base plate;
first and second separation walls on the base plate, wherein the first and second separation walls are spaced apart from each other with the battery cell assembly therebetween, and the first separation wall is closer to the venting device than the second separation wall; and
a pack lid covering the battery cell assembly and the first and second separation walls, wherein
the first separation wall includes one or more first vent holes,
the second separation wall includes one or more second vent holes, and
the first and second separation walls may be configured to guide the flow of gas inside the battery pack toward the venting device.

Accordingly, thermal propagation inside the battery pack can be delayed or prevented.

## Description

### [Technical Field]

The present disclosure relates to a battery pack.

This application claims the benefit of priority to Korean Patent Application No. 10-2024-0165054, filed on November 19, 2024, and the entire contents of Korean Patent Application No. 10-2024-0165054 are hereby incorporated by reference.

### [Background]

Secondary batteries can be repeatedly used for a long time through recharging. Secondary batteries are used in various fields such as mobility, portable electronic devices, and ESS (Energy Storage System). In particular, the demand for secondary batteries for mobility is increasing to reduce dependence on fossil fuels and reduce carbon emissions. However, concerns about the safety of secondary batteries remain an important issue to be addressed.

In the case of mobility, multiple battery cells are used to secure performance such as output and driving range. Generally, multiple battery cells constitute a battery module, and a battery pack composed of a plurality of battery modules is mounted on a vehicle. At this time, the multiple battery cells constituting the battery module are located adjacent to each other, and the battery modules constituting the battery pack are also located adjacent to each other. Therefore, when a thermal runaway event occurs in some battery cells, thermal propagation to adjacent battery cells easily occurs. If such thermal propagation occurs in a chain, a large explosion or fire may occur.

Therefore, there is a need for technology that can prevent the occurrence of thermal runaway events or delay or prevent thermal propagation inside the battery pack when a thermal runaway event occurs.

### [Summary]

### [Technical Problem]

The problem to be solved by the present disclosure is to delay or prevent thermal propagation inside the battery pack when a thermal runaway event occurs.

### [Technical Solution]

Some embodiments of the present disclosure that can solve the above problems are as follows.

The battery pack according to some embodiments includes:
a pack housing including a base plate and a side wall;
a venting device located on the side wall;
a battery cell assembly on the base plate;
first and second separation walls on the base plate, wherein the first and second separation walls are spaced apart from each other with the battery cell assembly therebetween, and the first separation wall is closer to the venting device than the second separation wall; and
a pack lid covering the battery cell assembly and the first and second separation walls, wherein
the first separation wall comprises one or more first vent holes,
the second separation wall includes one or more second vent holes,
   and
the first and second separation walls may be configured to guide the flow of gas inside the battery pack toward the venting device.

In some embodiments, the sum of the areas of the first vent holes may be equal to or less than the sum of the areas of the second vent holes.

In some embodiments, the number of the first vent holes may be equal to or less than the number of the second vent holes.

In some embodiments, the first and second vent holes may be closer to the pack lid than the battery cell assembly.

In some embodiments, each of the first and second separation walls may be coupled to the pack lid.

A battery pack according to some embodiments may further include: a first cross beam spaced apart from the battery cell assembly with the first separation wall therebetween; and a second cross beam spaced apart from the battery cell assembly with the second separation wall therebetween.

In some embodiments, a length of the first separation wall in a first direction perpendicular to the base plate is greater than a length of the first cross beam in the first direction, and a length of the second separation wall in the first direction may be greater than a length of the second cross beam in the first direction.

In some embodiments, each of the first and second separation walls is in contact with the pack lid, and each of the first and second cross beams may be spaced apart from the pack lid.

In some embodiments, each of the first and second separation walls may have an L-shaped structure or a flat plate structure.

In some embodiments, the first separation wall includes a first vertical portion and a first horizontal portion, the second separation wall includes a second vertical portion and a second horizontal portion, the first and second vertical portions are parallel to a first direction perpendicular to the base plate, the first and second horizontal portions are perpendicular to the first direction, and each of the first and second horizontal portions may overlap with a portion of the battery cell assembly in the first direction.

In some embodiments, the first and second horizontal portions may be in contact with the pack lid.

In some embodiments, the first vent holes may be located in the first vertical portion, and the second vent holes may be located in the second vertical portion.

A battery pack according to some embodiments may further include: a first cross beam spaced apart from the battery cell assembly with the first separation wall therebetween; and a second cross beam between the second separation wall and the battery cell assembly.

In some embodiments, the first separation wall includes a first vertical portion and a first horizontal portion, the second separation wall includes a second vertical portion and a second horizontal portion, the first and second vertical portions are parallel to a first direction perpendicular to the base plate, the first and second horizontal portions are perpendicular to the first direction, the first horizontal portion overlaps with a portion of the battery cell assembly in the first direction, and the second horizontal portion may not overlap with a portion of the battery cell assembly in the first direction.

In some embodiments, the battery cell assembly includes a plurality of battery cells arranged in a second direction, and some of the second vent holes may overlap with some of the first vent holes in the second direction.

### [Advantageous Effects]

The battery pack according to some embodiments of the present disclosure includes first and second separation walls configured to guide the flow of gas inside the battery pack toward the venting device, and thus can delay or prevent thermal propagation inside the battery pack.

The effects of some embodiments of the present disclosure are not limited to the effects mentioned above, and other effects not mentioned can be clearly derived and understood by those skilled in the art to which the present disclosure belongs from the following description. That is, unintended effects resulting from implementing some embodiments of the present disclosure can also be clearly derived and understood by those skilled in the art to which the present disclosure belongs.

### [Brief Description of the Drawings]

FIG. 1 is a diagram briefly showing a battery pack 1000 according to first embodiments.
FIG. 2 is a cross-sectional view taken along cutting line II-II' of FIG. 1.
FIG. 3 is a diagram showing a separation wall 1300_1.
FIG. 4 is a diagram showing separation walls 1300_2 and 1300_3.
FIG. 5 is a diagram showing separation walls 1300_4 and 1300_5.
FIG. 6 is a diagram showing separation walls 1300_6 and 1300_7.
FIG. 7 is a diagram briefly showing a battery pack 1000' according to second embodiments.
FIG. 8 is a diagram briefly showing a battery pack 1000'' according to third embodiments.

### [Best Mode for Carrying out the Disclosure]

Terms or words used in the present disclosure should not be construed as being limited to conventional or dictionary meanings, and should be interpreted in accordance with the meanings consistent with the technical idea of the present disclosure based on the principle that the inventor can appropriately define the meanings of terms or words to describe his or her invention in the best way.

In the present disclosure, terms such as "include" or "have" are intended to designate that features, numbers, steps, operations, components, parts, or combinations thereof described in the present disclosure exist, and should be understood not to preclude in advance the existence or possibility of addition of one or more other features, numbers, steps, operations, components, parts, or combinations thereof. Also, when a part such as a layer, film, region, or plate is said to be "on" another part, this includes not only the case where it is "directly on" the other part, but also the case where there is another part in between. Conversely, when a part such as a layer, film, region, or plate is said to be "under" another part, this includes not only the case where it is "directly under" the other part, but also the case where there is another part in between.

The embodiments and drawings are merely examples of the present disclosure and do not represent all of the technical ideas of the present disclosure, so it should be understood that various equivalents and modifications that can replace them may exist.

In describing the present disclosure, if it is determined that a detailed description of a known configuration or function may obscure the gist of the present disclosure, the detailed description will be omitted.

Since the drawings are provided to more completely explain the present disclosure to those skilled in the art, the shapes, sizes, and numbers of components in the drawings may be exaggerated, omitted, or schematically illustrated for clearer explanation. The shape, size, ratio, and number of each component in the drawings do not entirely reflect the shape, size, ratio, and number of the actual components.

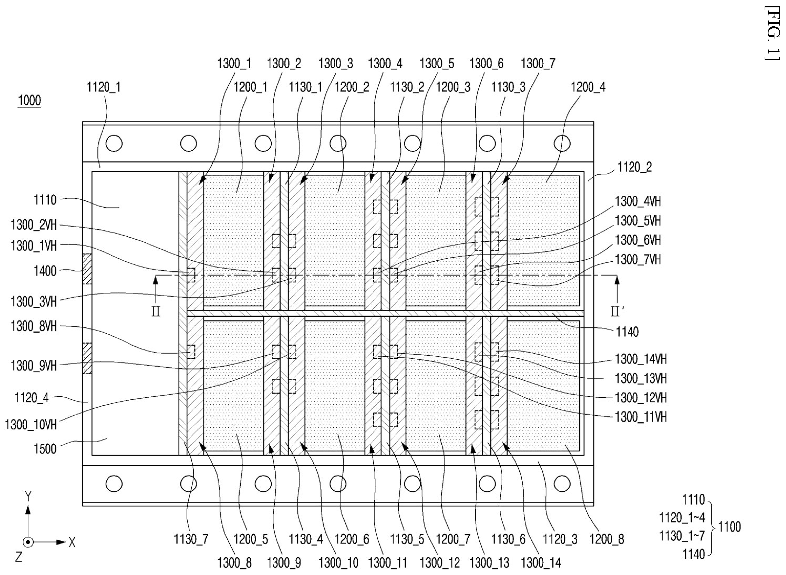

In the present disclosure, a three-dimensional Cartesian coordinate system is used to describe the positions of components, the shapes of components, and the relationships between components, etc. for convenience of explanation. The X-axis, Y-axis, and Z-axis are indicated in FIGS. 1, 2, 7, and 8. In this specification, "X direction" means a direction parallel to the X-axis. In this specification, "+X direction" means the same direction as the arrow direction of the X-axis indicated in FIGS. 1, 2, 7, and 8. In this specification, "-X direction" means the opposite direction to the arrow direction of the X-axis indicated in FIGS. 1, 2, 7, and 8. In this specification, "Y direction" means a direction parallel to the Y-axis. In this specification, "+Y direction" means the same direction as the arrow direction of the Y-axis indicated in FIGS. 1, 2, 7, and 8. In this specification, "-Y direction" means the opposite direction to the arrow direction of the Y-axis indicated in FIGS. 1, 2, 7, and 8. In this specification, "Z direction" means a direction parallel to the Z-axis. In this specification, "+Z direction" means the same direction as the arrow direction of the Z-axis indicated in FIGS. 1, 2, 7, and 8. In this specification, "-Z direction" means the opposite direction to the arrow direction of the Z-axis indicated in FIGS. 1, 2, 7, and 8.

Embodiments of the present disclosure will be described in detail with reference to the drawings.

### (First embodiment)

FIG. 1 is a diagram briefly showing a battery pack 1000 according to first embodiments.

Referring to FIG. 1, the battery pack 1000 may include a pack housing 1100, battery cell assemblies 1200_1~8, separation walls 1300_1~14, electrical components, one or more venting devices 1400, and a pack lid 1500. The battery pack 1000 may be the final form of a battery system mounted in mobility, etc.

In the present disclosure, only embodiments in which the number of battery cell assemblies is 8 and the battery cell assemblies are arranged in 2 rows and 4 columns are described, but this is merely exemplary. The number of battery cell assemblies and the arrangement of the battery cell assemblies may be determined according to the current, voltage, and dimensions required for the battery pack. A person of ordinary skill in the art will be able to easily reach embodiments with different numbers and arrangements of battery cell assemblies based on the present disclosure.

The pack housing 1100 may include a base plate 1110, side walls 1120_1~4, cross beams 1130_1~7, and a center beam 1140.

The base plate 1110 may support the side walls 1120_1~4, cross beams 1130_1~7, center beam 1140, battery cell assemblies 1200_1~8, separation walls 1300_1~14, and electrical components. The base plate 1110 may be substantially perpendicular to the Z direction. The base plate 1110 may be provided by an extrusion process. The extrusion direction of the base plate 1110 may be the X direction. The base plate 1110 may include a plurality of cooling channels. The plurality of cooling channels may be provided by an extrusion process. The plurality of cooling channels may be parallel to the X direction. The plurality of cooling channels may be spaced apart from each other in the Y direction. The material of the base plate 1110 may be one or more of aluminum, aluminum alloy, steel, and stainless steel.

The side walls 1120_1~4 may be located around the base plate 1110. The side walls 1120_1~4 may surround the cross beams 1130_1~7, center beam 1140, battery cell assemblies 1200_1~8, separation walls 1300_1~14, and electrical components. The side walls 1120_1~4 may be provided by an extrusion process. The extrusion direction of the side walls 1120_1, 1200_3 may be the X direction. The side walls 1120_1, 1200_3 may be substantially perpendicular to the Y direction. The extrusion direction of the side walls 1120_2, 1200_4 may be the Y direction. The side walls 1120_2, 1200_4 may be substantially perpendicular to the X direction. The side walls 1120_1~4 may include hollow parts provided by an extrusion process. The hollow parts may reduce the weight of the side walls 1120_1~4. The hollow parts may serve as cooling channels or venting paths for gas. The material of the side walls 1120_1~4 may be one or more of aluminum, aluminum alloy, steel, and stainless steel.

The cross beams 1130_1~6 may be substantially perpendicular to the X direction. Columns of the battery cell assemblies 1200_1~8 arranged in 2 rows and 4 columns may be distinguished by the cross beams 1130_1~6. The cross beams 1130_1~3 may extend in the Y direction between the side wall 1120_1 and the center beam 1140. The cross beams 1130_4~6 may extend in the Y direction between the side wall 1120_3 and the center beam 1140. The cross beams 1130_1~3 and the cross beams 1130_4~6 may be spaced apart from each other with the center beam 1140 therebetween.

Each of the cross beams 1130_1~6 may be located between corresponding ones of the battery cell assemblies 1200_1~8. The cross beam 1130_1 may be located between the battery cell assembly 1200_1 and the battery cell assembly 1200_2. The cross beam 1130_2 may be located between the battery cell assembly 1200_2 and the battery cell assembly 1200_3. The cross beam 1130_3 may be located between the battery cell assembly 1200_3 and the battery cell assembly 1200_4. The cross beam 1130_4 may be located between the battery cell assembly 1200_5 and the battery cell assembly 1200_6. The cross beam 1130_5 may be located between the battery cell assembly 1200_6 and the battery cell assembly 1200_7. The cross beam 1130_6 may be located between the battery cell assembly 1200_7 and the battery cell assembly 1200_8. The material of the cross beams 1130_1~6 may be one or more of aluminum, aluminum alloy, steel, and stainless steel.

The cross beam 1130_7 may be substantially perpendicular to the X direction. The cross beam 1130_7 may extend in the Y direction between the side wall 1120_1 and the side wall 1120_3. The cross beam 1130_7 may be located between the electrical components and the battery cell assemblies 1200_1~8. The material of the cross beam 1130_7 may be one or more of aluminum, aluminum alloy, steel, and stainless steel.

Each of the cross beams 1130_1~7 may be spaced apart from corresponding ones of the battery cell assemblies 1200_1~8 with corresponding ones of the separation walls 1300_1~14 therebetween. The cross beam 1130_1 may be spaced apart from the battery cell assembly 1200_1 with the separation wall 1300_2 therebetween. The cross beam 1130_1 may be spaced apart from the battery cell assembly 1200_2 with the separation wall 1300_3 therebetween. The cross beam 1130_2 may be spaced apart from the battery cell assembly 1200_2 with the separation wall 1300_4 therebetween. The cross beam 1130_2 may be spaced apart from the battery cell assembly 1200_3 with the separation wall 1300_5 therebetween. The cross beam 1130_3 may be spaced apart from the battery cell assembly 1200_3 with the separation wall 1300_6 therebetween. The cross beam 1130_3 may be spaced apart from the battery cell assembly 1200_4 with the separation wall 1300_7 therebetween. The cross beam 1130_4 may be spaced apart from the battery cell assembly 1200_5 with the separation wall 1300_9 therebetween. The cross beam 1130_4 may be spaced apart from the battery cell assembly 1200_6 with the separation wall 1300_10 therebetween. The cross beam 1130_5 may be spaced apart from the battery cell assembly 1200_6 with the separation wall 1300_11 therebetween. The cross beam 1130_5 may be spaced apart from the battery cell assembly 1200_7 with the separation wall 1300_12 therebetween. The cross beam 1130_6 may be spaced apart from the battery cell assembly 1200_7 with the separation wall 1300_13 therebetween. The cross beam 1130_6 may be spaced apart from the battery cell assembly 1200_8 with the separation wall 1300_14 therebetween. The cross beam 1130_7 may be spaced apart from the battery cell assembly 1200_1 with the separation wall 1300_1 therebetween. The cross beam 1130_7 may be spaced apart from the battery cell assembly 1200_5 with the separation wall 1300_8 therebetween.

The center beam 1140 may be substantially perpendicular to the Y direction. Rows of the battery cell assemblies 1200_1~8 arranged in 2 rows and 4 columns may be distinguished by the center beam 1140. The center beam 1140 may extend in the X direction between the cross beam 1130_7 and the side wall 1120_2. The center beam 1140 may be located between corresponding ones of the battery cell assemblies 1200_1~8. It may be located between the battery cell assemblies 1200_1~4 and the battery cell assemblies 1200_5~8. The material of the center beam 1140 may be one or more of aluminum, aluminum alloy, steel, and stainless steel.

Each of the battery cell assemblies 1200_1~8 may include battery cells. Each of the battery cells may be a lithium secondary battery. Each of the battery cells may include an electrode assembly, an electrolyte, and a cell case. The electrode assembly may include a positive electrode, a negative electrode, and a separator. The positive electrode may include a positive electrode active material layer, a positive electrode current collector, and a positive electrode tab. The negative electrode may include a negative electrode active material layer, a negative electrode current collector, and a negative electrode tab. The electrode assembly may be of a jelly-roll type or a stack-type. The jelly-roll type may have a structure in which the positive electrode, negative electrode, and separator are wound. The stack-type may have a structure in which a first electrode unit including a first positive electrode, a first negative electrode, and a first separator and a second electrode unit including a second positive electrode, a second negative electrode, and a second separator are stacked with a third separator therebetween. The electrolyte may be of a liquid type or a gel type. The cell case may be cylindrical, prismatic, or pouch-type. When the cell case is cylindrical or prismatic, the positive electrode tab and the negative electrode tab may be welded to the cell case. When the cell case is pouch-type, each of the battery cells may include a positive electrode lead and a negative electrode lead. The positive electrode lead may be electrically connected to one or more positive electrode tabs, and the negative electrode lead may be electrically connected to one or more negative electrode tabs. The positive electrode lead and the negative electrode lead may protrude from one side of the pouch-type cell case. The positive electrode lead and the negative electrode lead may protrude in the same direction or may protrude in opposite directions.

The battery cells may be arranged in the X direction. The battery cells may be composed of a plurality of banks. Each of the plurality of banks may be composed of one or more battery cells connected in parallel with each other. The plurality of banks may be connected in series with each other. The number of battery cells, the number of banks, and the number of battery cells constituting a bank included in each of the battery cell assemblies 1200_1~8 may be determined according to the magnitude of current and voltage required for each of the battery cell assemblies 1200_1~8.

Each of the battery cell assemblies 1200_1~8 may or may not include a module frame. When each of the battery cell assemblies 1200_1~8 includes a module frame, the battery pack 1000 may be said to be configured in a cell-to-module-to-pack CTMP manner. When each of the battery cell assemblies 1200_1~8 does not include a module frame, the battery pack 1000 may be said to be configured in a cell-to-pack CTP manner.

The module frame may accommodate the battery cells. The module frame may be open in the Y direction. The module frame may include a top plate including top vent holes. The module frame may be provided by coupling a top plate to a U-frame by welding and etc. The module frame may be an integrated mono frame, and the top plate may be part of the integrated mono frame. The material of the module frame may be one or more of aluminum, aluminum alloy, steel, and stainless steel.

Each of the separation walls 1300_2~7, 1300_9~14 may be located between corresponding ones of the battery cell assemblies 1200_1~8 to isolate corresponding ones of the battery cell assemblies 1200_1~8 from each other. Accordingly, even if a thermal runaway event occurs in one of the battery cell assemblies 1200_1~8, thermal propagation to other battery cell assemblies can be delayed or prevented.

The separation walls 1300_1~14 include vent holes and may be configured to guide the flow of gas inside the battery pack 1000 toward the venting device 1400. Accordingly, when a thermal runaway event occurs inside the battery pack 1000, high-temperature gas is quickly guided toward the venting device 1400, so that thermal propagation inside the battery pack 1000 can be delayed or prevented.

The sum of the areas of the vent holes included in those of the separation walls 1300_1~14 that are relatively close to the venting device may be equal to or less than the sum of the areas of the vent holes included in those of the separation walls 1300_1~14 that are relatively far from the venting device. The number of vent holes included in those of the separation walls 1300_1~14 that are relatively close to the venting device may be equal to or less than the number of vent holes included in those of the separation walls 1300_1~14 that are relatively far from the venting device.

Referring to FIG. 1, it can be seen that the separation walls 1300_1~7 have a structure symmetrical to the separation walls 1300_8~14 with the center beam 1140 therebetween. In the present disclosure, only the separation walls 1300_1~7 will be specifically described. A person of ordinary skill in the art to which the present disclosure belongs will be able to understand the separation walls 1300_8~14 based on the description of the separation walls 1300_1~7.

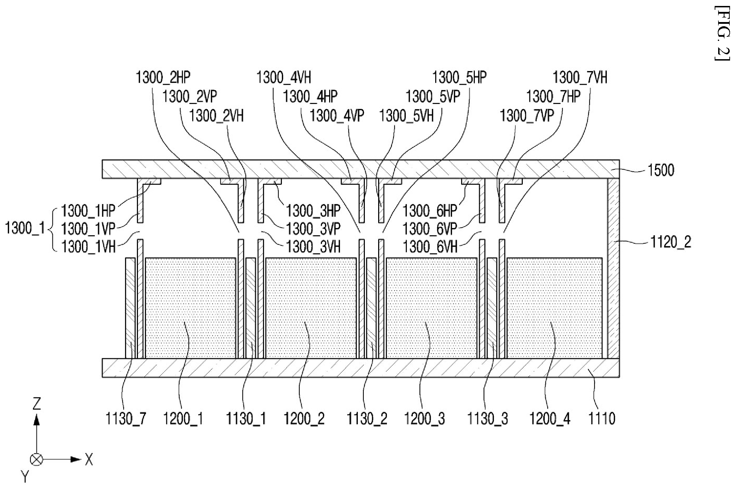

FIG. 2 is a cross-sectional view taken along cutting line II-II' of FIG. 1.

Referring to FIGS. 1 and 2, the separation walls 1300_1~7 may be spaced apart from each other with corresponding ones of the battery cell assemblies 1200_1~4 therebetween. The separation wall 1300_1 and the separation wall 1300_2 may be spaced apart from each other with the battery cell assembly 1200_1 therebetween. The separation wall 1300_3 and the separation wall 1300_4 may be spaced apart from each other with the battery cell assembly 1200_2 therebetween. The separation wall 1300_5 and the separation wall 1300_6 may be spaced apart from each other with the battery cell assembly 1200_3 therebetween.

The separation wall 1300_1 may be closer to the venting device 1400 than the separation wall 1300_2 is. The separation wall 1300_3 may be closer to the venting device 1400 than the separation wall 1300_4 is. The separation wall 1300_5 may be closer to the venting device 1400 than the separation wall 1300_6 is.

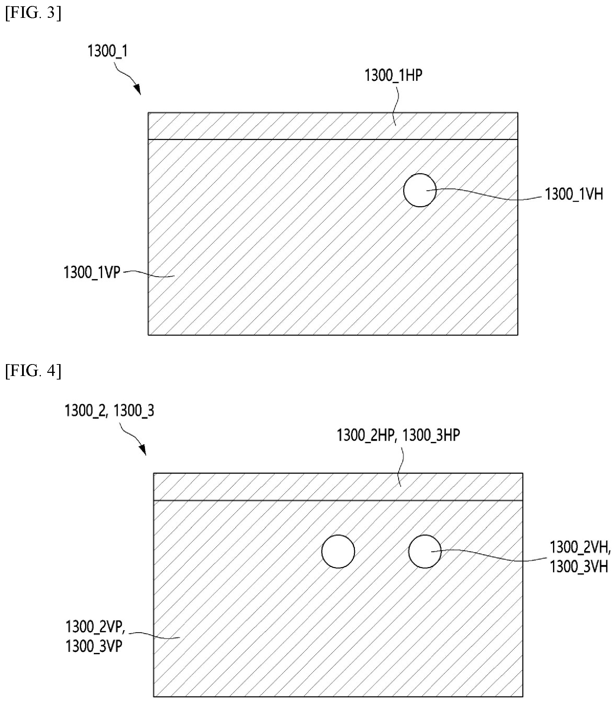

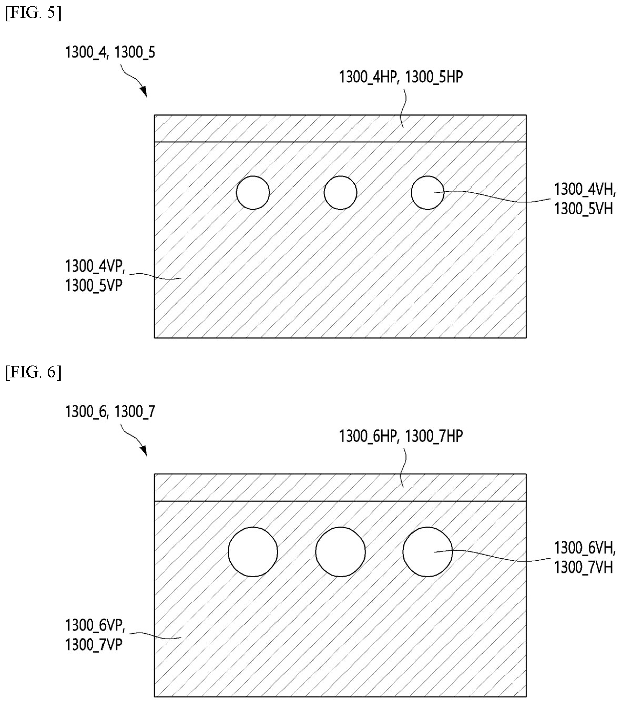

FIG. 3 is a diagram showing the separation wall 1300_1. Referring to FIG. 3, the separation wall 1300_1 may include a vent hole 1300_1VH. [73] FIG. 4 is a diagram showing separation walls 1300_2 and 1300_3. Referring to FIG. 4, the separation wall 1300_2 may include vent holes 1300_2VH, and the separation wall 1300_3 may include vent holes 1300_3VH. FIG. 5 is a diagram showing separation walls 1300_4 and 1300_5. Referring to FIG. 5, the separation wall 1300_4 may include vent holes 1300_4VH, and the separation wall 1300_5 may include vent holes 1300_5VH. FIG. 6 is a diagram showing separation walls 1300_6 and 1300_7. Referring to FIG. 6, the separation wall 1300_6 may include vent holes 1300_6VH, and the separation wall 1300_7 may include vent holes 1300_7VH.

Referring to FIGS. 1 to 6, it can be seen that the separation wall 1300_2 and the separation wall 1300_3 are substantially the same except for the position and the direction in which the horizontal portions 1300_2HP, 1300_3HP protrude from the vertical portions 1300_2VP, 1300_3VP. This is the same for the separation wall 1300_4 and the separation wall 1300_5, and the same for the separation wall 1300_6 and the separation wall 1300_7.

The sum of the areas of the vent hole 1300_1VH may be equal to or less than the sum of the areas of the vent holes 1300_2VH. The sum of the areas of the vent holes 1300_2VH may be substantially the same as the sum of the areas of the vent holes 1300_3VH. The sum of the areas of the vent holes 1300_3VH may be equal to or less than the sum of the areas of the vent holes 1300_4VH. The sum of the areas of the vent holes 1300_4VH may be substantially the same as the sum of the areas of the vent holes 1300_5VH. The sum of the areas of the vent holes 1300_5VH may be equal to or less than the sum of the areas of the vent holes 1300_6VH. The sum of the areas of the vent holes 1300_6VH may be substantially the same as the sum of the areas of the vent holes 1300_7VH. In the present disclosure, the area of a vent hole means the Z-Y plane area of the vent hole.

The number of vent holes 1300_1VH may be equal to or less than the number of vent holes 1300_2VH. The number of vent holes 1300_2VH may be the same as the number of vent holes 1300_3VH. The number of vent holes 1300_3VH may be equal to or less than the number of vent holes 1300_4VH. The number of vent holes 1300_4VH may be the same as the number of vent holes 1300_5VH. The number of vent holes 1300_5VH may be equal to or less than the number of vent holes 1300_6VH. The number of vent holes 1300_6VH may be the same as the number of vent holes 1300_7VH.

Some of the vent holes 1300_2VH may overlap with the vent hole 1300_1VH in the X direction. The vent holes 1300_2VH may overlap with the vent holes 1300_3VH in the X direction. Some of the vent holes 1300_4VH may overlap with the vent holes 1300_3VH in the X direction. The vent holes 1300_4VH may overlap with the vent holes 1300_5VH in the X direction. Some of the vent holes 1300_6VH may overlap with the vent holes 1300_5VH in the X direction. The vent holes 1300_6VH may overlap with the vent holes 1300_7VH in the X direction.

Referring to FIG. 2, the vent holes 1300_1VH~7VH may be closer to the pack lid 1500 than the battery cell assemblies 1200_1~4 are. The vent holes 1300_1VH~7VH may be closer to the pack lid 1500 than the cross beams 1130_1~3, 1300_7 are. The length of the separation walls 1300_1~7 in the Z direction may be greater than the length of the cross beams 1130_1~3, 1300_7 in the Z direction. The separation walls 1300_1~7 may be in contact with the pack lid 1500. The separation walls 1300_1~7 may be coupled to the pack lid 1500 by fasteners. The cross beams 1130_1~3, 1300_7 may not be in contact with the pack lid 1500. The cross beams 1130_1~3, 1300_7 may be spaced apart from the pack lid.

Referring to FIGS. 2 to 6, each of the separation walls 1300_1~7 may have an approximately L-shaped structure. The separation wall 1300_1 may include a vertical portion 1300_1VP and a horizontal portion 1300_1HP. The separation wall 1300_2 may include a vertical portion 1300_2VP and a horizontal portion 1300_2HP. The separation wall 1300_3 may include a vertical portion 1300_3VP and a horizontal portion 1300_3HP. The separation wall 1300_4 may include a vertical portion 1300_4VP and a horizontal portion 1300_4HP. The separation wall 1300_5 may include a vertical portion 1300_5VP and a horizontal portion 1300_5HP. The separation wall 1300_6 may include a vertical portion 1300_6VP and a horizontal portion 1300_6HP. The separation wall 1300_7 may include a vertical portion 1300_7VP and a horizontal portion 1300_7HP.

Each of the vertical portions 1300_1VP~7VP may be substantially perpendicular to the X direction. Each of the vertical portions 1300_1VP~7VP may be substantially parallel to the Z direction and the Y direction. Each of the horizontal portions 1300_1HP~7HP may be substantially perpendicular to the Z direction.

Each of the horizontal portions 1300_1HP~7HP may be in contact with the pack lid 1500. The vent hole 1300_1VH may be located in the vertical portion 1300_1VP. The vent holes 1300_2VH may be located in the vertical portion 1300_2VP. The vent holes 1300_3VH may be located in the vertical portion 1300_3VP. The vent holes 1300_4VH may be located in the vertical portion 1300_4VP. The vent holes 1300_5VH may be located in the vertical portion 1300_5VP. The vent holes 1300_6VH may be located in the vertical portion 1300_6VP. The vent holes 1300_7VH may be located in the vertical portion 1300_7VP.

The horizontal portion 1300_1HP may protrude from the vertical portion 1300_1VP in the +X direction. The horizontal portion 1300_1HP may overlap with a portion of the battery cell assembly 1200_1 in the Z direction. The horizontal portion 1300_2HP may protrude from the vertical portion 1300_2VP in the -X direction. The horizontal portion 1300_2HP may overlap with a portion of the battery cell assembly 1200_1 in the Z direction. The horizontal portion 1300_3HP may protrude from the vertical portion 1300_3VP in the +X direction. The horizontal portion 1300_3HP may overlap with a portion of the battery cell assembly 1200_2 in the Z direction. The horizontal portion 1300_4HP may protrude from the vertical portion 1300_4VP in the -X direction. The horizontal portion 1300_4HP may overlap with a portion of the battery cell assembly 1200_2 in the Z direction. The horizontal portion 1300_5HP may protrude from the vertical portion 1300_5VP in the +X direction. The horizontal portion 1300_5HP may overlap with a portion of the battery cell assembly 1200_3 in the Z direction. The horizontal portion 1300_6HP may protrude from the vertical portion 1300_6VP in the -X direction. The horizontal portion 1300_6HP may overlap with a portion of the battery cell assembly 1200_3 in the Z direction. The horizontal portion 1300_7HP may protrude from the vertical portion 1300_7VP in the +X direction. The horizontal portion 1300_7HP may overlap with a portion of the battery cell assembly 1200_4 in the Z direction.

The electrical components may be located between the side wall 1120_4 and the cross beam 1130_7. The electrical components may include a Battery Management System (BMS), a Power Relay Assembly (PRA), etc. The BMS may be configured to monitor the states such as voltage, current, and temperature of the battery cells, uniformly balance the voltage, capacity, etc. between the battery cells, and control the charging and discharging of the battery cells. The PRA may be configured to connect or disconnect the high-voltage circuit according to signals from the BMS to supply or cut off the high-voltage current of the battery cell assemblies 1200_1~8 to external loads such as motors and inverters. The PRA may be configured to alleviate voltage surges to prevent damage to external loads such as motors and inverters.

The venting device 1400 may be located on the side wall 1120_4. The venting device 1400 may be configured to provide a path through which high-temperature gas, etc. inside the battery pack 1000 can be discharged outside the battery pack 1000 when a thermal runaway event occurs inside the battery pack 1000. The venting device may be configured to prevent dust, moisture, water, etc. outside the battery pack 1000 from entering the inside of the battery pack 1000.

The pack lid 1500 may be coupled to the side walls 1120_1, 1120_2, 1120_3, 1120_4 by fasteners. The pack lid 1500 may cover the cross beams 1130_1~7, center beam 1140, battery cell assemblies 1200_1~8, separation walls 1300_1~14, and electrical components. The pack lid 1500 may be substantially perpendicular to the Z direction. The material of the pack lid 1500 may be one or more of aluminum, aluminum alloy, steel, or stainless steel.

### (Second embodiment)

The second embodiment is substantially the same as the first embodiment except that each of the separation walls 1300_1'~14' has a flat plate structure rather than an L-shaped structure, so descriptions of portions substantially the same as the first embodiment will be omitted.

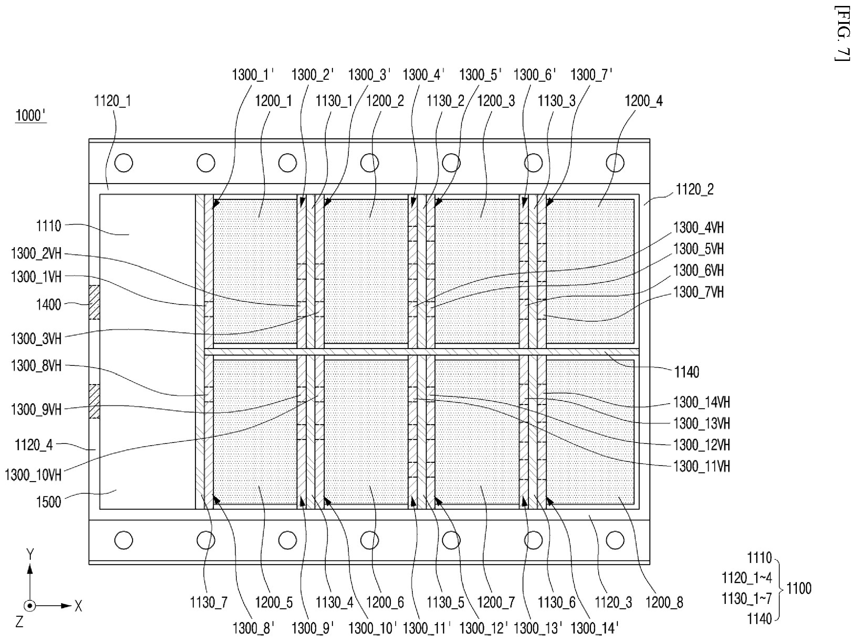

FIG. 7 is a diagram briefly showing a battery pack 1000' according to second embodiments.

Referring to FIG. 7, the separation walls 1300_1'~7' may have an approximately flat plate structure. The separation walls 1300_1'~7' may be perpendicular to the X direction. The separation wall 1300_1' may not include a horizontal portion 1300_1'HP. The separation wall 1300_2' may not include a horizontal portion 1300_2'HP. The separation wall 1300_3' may not include a horizontal portion 1300_3'HP. The separation wall 1300_4' may not include a horizontal portion 1300_4'HP. The separation wall 1300_5' may not include a horizontal portion 1300_5'HP. The separation wall 1300_6' may not include a horizontal portion 1300_6'HP. The separation wall 1300_7' may not include a horizontal portion 1300_7'HP.

The second embodiment can reduce the manufacturing cost of the battery pack compared to the first embodiment.

### (Third embodiment)

The third embodiment is substantially the same as the first embodiment except that it does not include separation walls 1300_2, 4, 6, 9, 11, 13, so descriptions of portions substantially the same as the first embodiment will be omitted.

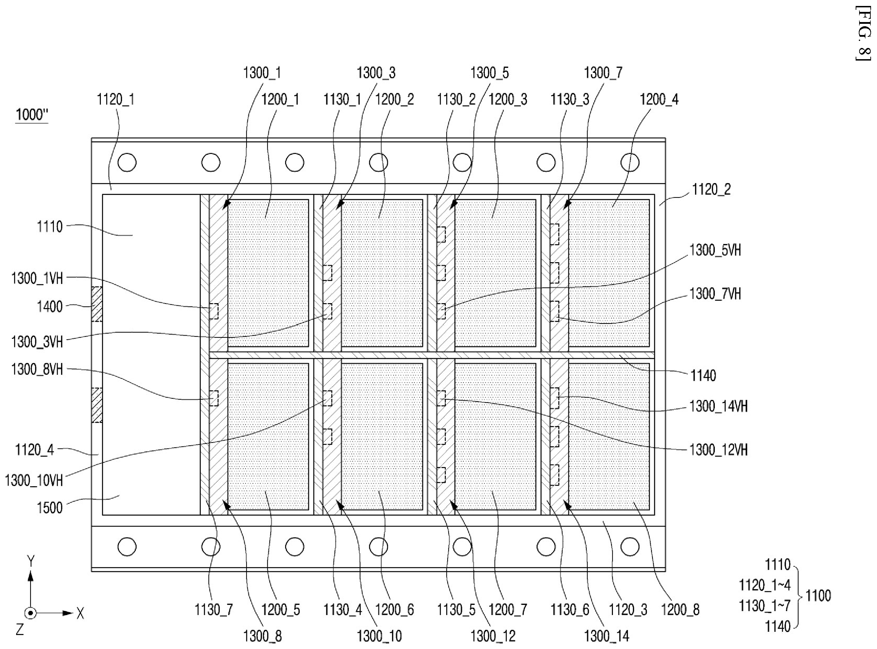

FIG. 8 is a diagram briefly showing a battery pack 1000'' according to third embodiments.

Referring to FIG. 8, the separation wall 1300_1 and the separation wall 1300_3 may be spaced apart from each other with the battery cell assembly 1200_1 therebetween. The separation wall 1300_3 and the separation wall 1300_5 may be spaced apart from each other with the battery cell assembly 1200_2 therebetween. The separation wall 1300_5 and the separation wall 1300_7 may be spaced apart from each other with the battery cell assembly 1200_3 therebetween.

The separation wall 1300_1 may be closer to the venting device 1400 than the separation wall 1300_3 is. The separation wall 1300_3 may be closer to the venting device 1400 than the separation wall 1300_5 is. The separation wall 1300_5 may be closer to the venting device 1400 than the separation wall 1300_7 is.

The sum of the areas of the vent holes 1300_1VH may be equal to or less than the sum of the areas of the vent holes 1300_3VH. The sum of the areas of the vent holes 1300_3VH may be equal to or less than the sum of the areas of the vent holes 1300_5VH. The sum of the areas of the vent holes 1300_5VH may be equal to or less than the sum of the areas of the vent holes 1300_7VH.

The number of vent holes 1300_1VH may be equal to or less than the number of vent holes 1300_3VH. The number of vent holes 1300_3VH may be equal to or less than the number of vent holes 1300_5VH. The number of vent holes 1300_5VH may be equal to or less than the number of vent holes 1300_7VH.

The cross beam 1130_1 may be located between the battery cell assembly 1200_1 and the separation wall 1300_3. The cross beam 1130_2 may be located between the battery cell assembly 1200_2 and the separation wall 1300_5. The cross beam 1130_3 may be located between the battery cell assembly 1200_3 and the separation wall 1300_7. The cross beam 1130_4 may be located between the battery cell assembly 1200_5 and the separation wall 1300_10. The cross beam 1130_5 may be located between the battery cell assembly 1200_6 and the separation wall 1300_12. The cross beam 1130_6 may be located between the battery cell assembly 1200_7 and the separation wall 1300_14.

The vertical portion 1300_3VP may not overlap with the battery cell assembly 1200_1 in the Z direction. The vertical portion 1300_5VP may not overlap with the battery cell assembly 1200_2 in the Z direction. The vertical portion 1300_7VP may not overlap with the battery cell assembly 1200_3 in the Z direction. The vertical portion 1300_10VP may not overlap with the battery cell assembly 1200_5 in the Z direction. The vertical portion 1300_12VP may not overlap with the battery cell assembly 1200_6 in the Z direction. The vertical portion 1300_14VP may not overlap with the battery cell assembly 1200_7 in the Z direction.

The third embodiment can reduce the manufacturing cost of the battery pack compared to the first embodiment. The third embodiment can simplify the manufacturing process of the battery pack compared to the first embodiment.

The above description is merely for illustrative explanation of the present disclosure. The scope of rights of the present disclosure should be interpreted by the claims, and all technical ideas within the scope equivalent or equivalent thereto should be interpreted as being included in the scope of rights of the present disclosure.

### [Description of Reference Numerals]

1000: BATTERY PACK
1100: PACK HOUSING
1110: BASE PLATE
1120: SIDE WALL
1130: CROSS BEAM
1140: CENTER BEAM
1200: BATTERY CELL ASSEMBLY
1300: SEPARATION WALL
1400: VENTING DEVICE
1500: PACK LID

## Claims

1. A battery pack comprising:
a pack housing comprising a base plate and a side wall;
a venting device located on the side wall;
a battery cell assembly on the base plate;
first and second separation walls on the base plate, wherein the first and second separation walls are spaced apart from each other with the battery cell assembly therebetween, and the first separation wall is closer to the venting device than the second separation wall; and
a pack lid covering the battery cell assembly and the first and second separation walls, wherein
the first separation wall comprises one or more first vent holes,
the second separation wall comprises one or more second vent holes, and
the first and second separation walls are configured to guide the flow of gas inside the battery pack toward the venting device.

2. The battery pack of claim 1, wherein
the sum of the areas of the first vent holes is equal to or less than the sum of the areas of the second vent holes.

3. The battery pack of claim 1, wherein
the number of the first vent holes is equal to or less than the number of the second vent holes.

4. The battery pack of claim 1, wherein
the first and second vent holes are closer to the pack lid than the battery cell assembly.

5. The battery pack of claim 1, wherein
each of the first and second separation walls is coupled to the pack lid.

6. The battery pack of claim 1, further comprising:
a first cross beam spaced apart from the battery cell assembly with the first separation wall therebetween; and
a second cross beam spaced apart from the battery cell assembly with the second separation wall therebetween.

7. The battery pack of claim 6, wherein
a length of the first separation wall in a first direction perpendicular to the base plate is greater than a length of the first cross beam in the first direction, and
a length of the second separation wall in the first direction is greater than a length of the second cross beam in the first direction.

8. The battery pack of claim 6, wherein
each of the first and second separation walls is in contact with the pack lid, and
each of the first and second cross beams is spaced apart from the pack lid.

9. The battery pack of claim 1, wherein
each of the first and second separation walls has an L-shaped structure or a flat plate structure.

10. The battery pack of claim 1, wherein
the first separation wall comprises a first vertical portion and a first horizontal portion,
the second separation wall comprises a second vertical portion and a second horizontal portion,
the first and second vertical portions are parallel to a first direction perpendicular to the base plate,
the first and second horizontal portions are perpendicular to the first direction, and
each of the first and second horizontal portions overlaps with a portion of the battery cell assembly in the first direction.

11. The battery pack of claim 10, wherein
the first and second horizontal portions are in contact with the pack lid.

12. The battery pack of claim 10, wherein
the first vent holes are located in the first vertical portion, and
the second vent holes are located in the second vertical portion.

13. The battery pack of claim 1, further comprising:
a first cross beam spaced apart from the battery cell assembly with the first separation wall therebetween; and
a second cross beam between the second separation wall and the battery cell assembly.

14. The battery pack of claim 13, wherein
the first separation wall comprises a first vertical portion and a first horizontal portion,
the second separation wall comprises a second vertical portion and a second horizontal portion,
the first and second vertical portions are parallel to a first direction perpendicular to the base plate,
the first and second horizontal portions are perpendicular to the first direction,
the first horizontal portion overlaps with a portion of the battery cell assembly in the first direction, and
the second horizontal portion does not overlap with a portion of the battery cell assembly in the first direction.

15. The battery pack of claim 1, wherein
the battery cell assembly comprises a plurality of battery cells arranged in a second direction, and
some of the second vent holes overlap with some of the first vent holes in the second direction.
